# EUROPEAN PATENT SPECIFICATION

(11) **EP 2 440 691 B1**
(45) Date of publication and mention of the grant of the patent: **23.10.2019**
(21) Application number: 10728060.4
(22) Date of filing: 08.06.2010
(51) Int. Cl.: C25D 5/10, C25D 15/00, C25D 5/20, C25D 5/18, C25D 5/14

(54) **ELECTRODEPOSITED, NANOLAMINATE COATINGS AND CLADDINGS FOR CORROSION PROTECTION**
ELEKTROLYTISCHE NANOLAMINATBESCHICHTUNGEN UND -PLATTIERUNGEN FÜR KORROSIONSSCHUTZ
REVÊTEMENTS NANOSTRATIFIÉS ÉLECTRODÉPOSÉS ET GAINES POUR LA PROTECTION CONTRE LA CORROSION

(30) Priority: 08.06.2009 US 185020 P
(43) Date of publication of application: 18.04.2012
(60) Divisional application: 15003342.1
(73) Proprietor: Modumetal, Inc., Seattle, WA 98103 (US)
(72) Inventor: LOMASNEY, Christina, Seattle, WA 98105 (US)
(74) Representative: Bösl, Raphael Konrad
(86) International application number: PCT/US2010/037856
(87) International publication number: WO 2010/144509

(56) References cited:
- WO-A1-2009/079745
- US-A- 4 869 971
- US-A- 5 268 235
- US-A1- 2002 070 118
- US-A1- 2004 211 672
- US-A1- 2006 243 597
- US-A1- 2006 272 949
- US-A1- 2009 130 425
- US-B1- 6 344 123
- V. THANGARAJ ET AL: "Surface modification by compositionally modulated multilayered Zn-Fe coatings", CHINESE JOURNAL OF CHEMISTRY, vol. 26, 2008, pages 2285-2291, XP002618056,
- V. THANGARAJ ET AL: "Corrosion behaviour of composition modulated multilayer Zn-Co electrodeposits produced using a single-bath technique", JOURNAL OF APPLIED ELECTROCHEMISTRY, vol. 39, 21 October 2008 (2008-10-21), pages 339-345, XP002618057,
- A. TOKARZ ET AL: "Preparation, structural and mechanical properties of electrodeposited Co/Cu multilayers", PHYSICA STATUS SOLIDI, vol. 5, no. 11, 18 June 2008 (2008-06-18), pages 3526-3529, XP002618058,
- ONODA M ET AL: "Preparation of amorphous/crystalloid soft magnetic multilayer Ni-Co-B alloy films by electrodeposition", JOURNAL OF MAGNETISM AND MAGNETIC MATERIALS, ELSEVIER SCIENCE PUBLISHERS, AMSTERDAM, NL, vol. 126, no. 1-3, 1 September 1993 (1993-09-01), pages 595-598, XP024464188, ISSN: 0304-8853, DOI: DOI:10.1016/0304-8853(93)90697-Z [retrieved on 1993-09-01]
- C. A. ROSS: "Electrodeposited multilayer thin films", ANNUAL REVIEW OF MATERIALS SCIENCE, vol. 24, 1994, pages 159-188, XP002618059,
- HUANG ET AL: "Characterization of Cr-Ni multilayers electroplated from a chromium(III)-nickel(II) bath using pulse current", SCRIPTA MATERIALIA, ELSEVIER, AMSTERDAM, NL, vol. 57, no. 1, 24 April 2007 (2007-04-24) , pages 61-64, XP022044412, ISSN: 1359-6462, DOI: 10.1016/J.SCRIPTAMAT.2007.02.004
- IVANOV I ET AL: "CORROSION RESISTANCE OF COMPOSITIONALLY MODULATED MULTILAYERED ZN-NI ALLOYS DEPOSITED FROM A SINGLE BATH", JOURNAL OF APPLIED ELECTROCHEMISTRY, SPRINGER, DORDRECHT, NL, vol. 33, no. 3/04, 1 March 2003 (2003-03-01), pages 239-244, XP001192882, ISSN: 0021-891X, DOI: 10.1023/A:1024179032045
- I Kirilova ET AL: "Corrosion behaviour of Zn-Co compositionally modulated multilayers electrodeposited from single and dual baths", Journal of Applied Electrochemistry, 1 September 1999 (1999-09-01), pages 1133-1137, XP055257880, Dordrecht DOI: 10.1023/A:1003675216529 Retrieved from the Internet: URL:http://rd.springer.com/content/pdf/10. 1023/A:1003675216529.pdf [retrieved on 2016-03-14]
- R. Weil ET AL: "Properties of composite electrodeposits", , 1 January 1990 (1990-01-01), XP055257886, Retrieved from the Internet: URL:http://www.dtic.mil/dtic/tr/fulltext/u 2/a228079.pdf [retrieved on 2016-03-14]
- ROUSSEAU A ET AL: "SINGLE-BATH ELECTRODEPOSITION OF CHROMIUM-NICKEL COMPOSITIONALLY MODULATED MULTILAYERS (CMM) FROM A TRIVALENT CHROMIUM BATH", PLATING AND SURFACE FINISHING, AMERICAN ELECTROPLATERS SOCIETY,INC. EAST ORANGE, US, vol. 86, no. 9, 1 September 1999 (1999-09-01), pages 106-110, XP000853162, ISSN: 0360-3164

## Description

### BACKGROUND

Laminated metals, and in particular nanolaminated metals, are of interest for structural and thermal applications because of their unique toughness, fatigue resistance and thermal stability. For corrosion protection, however, relatively little success has been reported in the formation of corrosion-resistant coatings that are laminated on the nanoscale.

Electrodeposition has been successfully used to deposit nanolaminated coatings on metal and alloy components for a variety of engineering applications. Electrodeposition is recognized as a low-cost method for forming a dense coating on any conductive substrate. Electrodeposition has been demonstrated as a viable means for producing nanolaminated coatings, in which the individual laminates may vary in the composition of the metal, ceramic or organic-metal composition or other microstructure feature. By time varying electrodeposition parameters such as current density, bath composition, pH, mixing rate, and/or temperature, multi-laminate materials can be produced in a single bath. Alternately by moving a mandrel or substrate from one bath to another, each of which represents a different combination of parameters that are held constant, multi-laminate materials or coatings can be realized.

The corrosion behavior of organic, ceramic, metal and metal-containing coatings depends primarily on their chemistry, microstructure, adhesion, thickness and galvanic interaction with the substrate to which they are applied. In the case of sacrificial metal or metal-containing coatings, such as zinc on an iron-based substrate, the coating is less electronegative than the substrate and so oxidation of the coating occurs preferentially, thus protecting the substrate. Because these coatings protect by providing an oxidation-preferred sacrificial layer, they will continue to work even when marred or scratched. The performance of sacrificial coatings depends heavily on the rate of oxidation of the coating layer and the thickness of the sacrificial layer. Corrosion protection of the substrate only lasts so long as the sacrificial coating is in place and may vary depending on the environment that the coating is subjected to and the resulting rate of coating oxidation.

Alternately, in the case of a barrier coating, such as nickel on an iron-based substrate, the coating is more electronegative than the substrate and thus works by creating a barrier to oxidative corrosion. In A-type metals, such as Fe, Ni, Cr and Zn, it is generally true that the higher the electronegativity, the greater the nobility (non reactivity). When the coating is more noble than the substrate, if that coating is marred or scratched in any way, or if coverage is not complete, these coatings will not work, and may accelerate the progress of substrate corrosion at the substrate: coating interface, resulting in preferential attack of the substrate. This is also true when ceramic coatings are used. For example, it has been reported in the prior art that while fully dense TiN coatings are more noble than steel and aluminum in resistance to various corrosive environments, pinholes and micropores that can occur during processing of these coating are detrimental to their corrosion resistance properties. In the case of barrier coatings, pinholes in the coating may accelerate corrosion in the underlying metal by pitting, crevice or galvanic corrosion mechanisms.

Many approaches have been utilized to improve the corrosion resistance of barrier coatings, such as reducing pinhole defects through the use of a metallic intermediate layer or multiple layering schemes. Such approaches are generally targeted at reducing the probability of defects or reducing the susceptibility to failure in the case of a defect, mar or scratch. One example of a multiple layering scheme is the practice commonly found in the deployment of industrial coatings, which involves the use of a primer, containing a sacrificial metal such as zinc, coupled with a highly-crosslinked, low surface energy topcoat (such as a fluorinated or polyurethane topcoat). In such case, the topcoat acts as a barrier to corrosion. In case the integrity of the topcoat is compromised for any reason, the metal contained in the primer acts as a sacrificial media, thus sacrificially protecting the substrate from corrosion.

Dezincification is a term is used to mean the corroding away of one constituent of any alloy leaving the others more or less in situ. This phenomenon is perhaps most common in brasses containing high percentages of zinc, but the same or parallel phenomena are familiar in the corrosion of aluminum bronzes and other alloys of metals of widely different chemical affinities. Dezincification usually becomes evident as an area with well-defined boundaries, and within which the more noble metal becomes concentrated as compared with the original alloy. In the case of brass the zinc is often almost completely removed and copper is present almost in a pure state, but in a very weak mechanical condition. Corrosion by dezincification usually depends on the galvanic differential between the dissimilar metals and the environmental conditions contributing to corrosion. Dezincification of alloys results in overall loss of the structural integrity of the alloy and is considered one of the most aggressive forms of corrosion.

Coatings that may represent the best of both the sacrificial coating and the barrier coating are those that are more noble than the substrate and creates a barrier to corrosion, but, in case that coating is compromised, is also less noble than the substrate and will sacrificially corrode, thus protecting the substrate from direct attack.
The preparation of amorphous/crystalloid soft magnetic multilayer Ni-Co-B alloy films by electrodeposition is described in Onoda M. et al. J. of Magnetism and Magnetic materials, 1993, 126 (1-3), 595-598. The corrosion behaviour of Zn-Co compositionally modulated multilayers electrodeposited from single and dual baths is described in Kirilova J. et al. J. Appl. Electrochem. 1999, 1133-1137.

### SUMMARY OF THE INVENTION

The present invention is directed to an electrodeposition method for producing a multilayer coating that comprises multiple nanoscale layers on a substrate for protecting the substrate from corrosion caused by oxidation, reduction, stress, dissolution, acid, base or sulfidation, the method comprising:
(a) placing a substrate to be coated in an electrolyte containing metal ions, ceramic particles, polymer particles, or a combination thereof;
(b) applying electric current and varying in time one or more of: the amplitude of the electric current, electrolyte temperature, electrolyte additive concentration, or electrolyte agitation, in order to produce multiple first and second nanoscale layers having a thickness from 0.5 to 10,000 nanometers that periodically vary in electrodeposited species or electrodeposited species microstructures, wherein variations in said nanoscale layers of said electrodeposited species or electrodeposited species microstructures result in galvanic interactions between the first nanoscale layers and the second nanoscale layers, wherein the first nanoscale layers have a first reactivity and the second nanoscale layers have a second reactivity that define the galvanic interactions between the first nanoscale layers and the second nanoscale layers; and
(c) growing the multilayer coating under such conditions until the desired thickness of the multilayer coating on said substrate is achieved;
wherein the electrodeposited species comprise an alloy of Ni and Co; and
wherein one of the first or second nanoscale layers is more noble than the substrate and another of the first or second nanoscale layers is less noble than the substrate, or wherein the first and second nanoscale layers are both more noble than the substrate.

Furthermore, the present invention is directed to an electrodeposited, corrosion-resistant multilayer coating on a substrate, comprising:
multiple first and second nanoscale layers that periodically vary in electrodeposited species or electrodeposited species microstructures, wherein variations in said nanoscale layers of said electrodeposited species or electrodeposited species microstructure result in galvanic interactions between the nanoscale layers, said multiple nanoscale layers having interfaces between the nanoscale layers;
said multiple first and second nanoscale layers have a thickness from 0.5 to 10,000 nanometers;
wherein the electrodeposited species comprise an alloy of Ni and Co; and
wherein one of the first or second nanoscale layers is more noble than the substrate and another of the first or second nanoscale layers is less noble than the substrate, or wherein the first and second nanoscale layers are both more noble than the substrate.

Furthermore, the present invention is directed to the use of a multilayer coating that comprises multiple nanoscale layers for protection from corrosion, the multilayer coating comprising multiple first and second nanoscale layers having a thickness from 0.5 to 10,000 nanometers that vary periodically in electrodeposited species or electrodeposited species microstructures;
wherein the electrodeposited species comprises an alloy of Ni and Co; and
wherein the overall thickness of the coating is 20 micrometers to 200 micrometers or the overall thickness is 200 micrometers to 5 millimeters.

In one embodiment of the technology described herein, the phenomena observed in dezincification of alloys is leveraged to enable corrosion resistant coatings that are both more and less noble than the substrate, and which protect the substrate by acting both as a barrier and as a sacrificial coating. Other embodiments and advantages of this technology will become apparent upon consideration of the following description.

The technology described herein includes an electrodeposited, corrosion-resistant multilayer coating or cladding, which comprises multiple nanoscale layers that periodically vary in electrodeposited species or electrodeposited microstructures (electrodeposited species microstructures), wherein variations in said layers of said electrodeposited species or electrodeposited species microstructure result in galvanic interactions between the layers, said nanoscale layers having interfaces there between.

The technology described herein also provides an electrodeposition method for producing a corrosion resistant multilayer coating or cladding comprising the steps of:
a) placing a mandrel or a substrate to be coated in a first electrolyte containing one or more metal ions, ceramic particles, polymer particles, or a combination thereof; and
b) applying electric current and varying in time one or more of: the amplitude of the electrical current, electrolyte temperature, electrolyte additive concentration, or electrolyte agitation, in order to produce periodic layers of electrodeposited species or periodic layer of electrodeposited species microstructures; and
c) growing a multilayer coating under such conditions until the desired thickness of the multilayer coating is achieved.

Such a method may further comprising after step (c), step (d), which comprises removing the mandrel or the substrate from the bath and rinsing.

The technology described herein further provides an electrodeposition method for producing a corrosion resistant multilayer coating or cladding comprising the steps of:
a) placing a mandrel or substrate to be coated in a first electrolyte containing one or more metal ions, ceramic particles, polymer particles, or a combination thereof; and
b) applying electric current and varying in time one or more of: the electrical current, electrolyte temperature, electrolyte additive concentration, or electrolyte agitation, in order to produce periodic layers of electrodeposited species or periodic layer of electrodeposited species microstructures; and
c) growing a nanometer-thickness layer under such conditions; and
d) placing said mandrel or substrate to be coated in a second electrolyte containing one or more metal ions that is different from said first electrolyte, said second electrolyte containing metal ions, ceramic particles, polymer particles, or a combination thereof; and
e) repeating steps (a) through (d) until the desired thickness of the multilayer coating is achieved;
wherein steps (a) through (d) are repeated at least two times. Such a method may further comprising after step (e), step (f) which comprises removing the mandrel or the coated substrate from the bath and rinsing.

Also described herein is an electrodeposited, corrosion-resistant multilayer coating or cladding, which comprises multiple nanoscale layers that vary in electrodeposited species microstructure, which layer variations result in galvanic interactions occurring between the layers. Also described is a corrosion-resistant multilayer coating or cladding, which comprises multiple nanoscale layers that vary in electrodeposited species, which layer variations result in galvanic interactions occurring between the layers.

The coating and claddings described herein are resistant to corrosion due to oxidation, reduction, stress, dissolution, dezincification, acid, base, or sulfidation and the like.

### BRIEF DESCRIPTION OF THE DRAWINGS

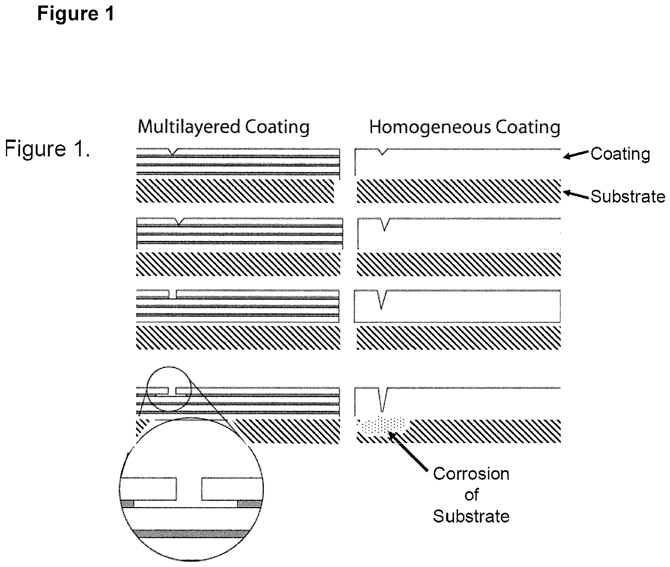

Figure 1 shows a schematic of a substrate having the "Multilayered Coating" of a preferred embodiment (on the left of Figure 1) and a schematic of a substrate having a "Homogeneous Coating" as is known in the art (on the right of Figure 1). Both the left and right side schematics represent how a pinhole, a micropore or damage to a coating changes over time (in sequence from the top to the bottom of Figure 1) relative to the substrate shown on the bottom of each of the sequences. The schematic illustrates a few representative layers that are not to scale with the substrate. In typical embodiments coating layers are on the nanoscale and present in a greater number than shown in Fig. 1.

### DETAILED DESCRIPTION

In one embodiment an electrodeposited corrosion-resistant multilayer coating comprised of individual layers with thicknesses on the nanometer scale is provided. In such an embodiment the individual layers can differ in electronegativity from adjacent layers.

In other embodiments, the present technology provides corrosion-resistant multilayer coatings or claddings (together herein referred to as a "coating") that comprise multiple nanoscale layers having variations in the composition of metal, alloy, polymer, or ceramic components, or combination thereof (together herein referred to as "electrodeposited species").

In such embodiments the variations in the compositions between layers results in galvanic interactions occurring between the layers.

In another embodiment, the present technology provides a corrosion-resistant multilayer coating that comprises multiple nanoscale layers having layer variations in grain size, crystal orientation, grain boundary geometry, or combination thereof (together herein referred to as "electrodeposited species microstructure(s)"), which layer variations result in galvanic interactions occurring between the layers.

In another embodiment multilayer coating or cladding is provided for, in which the layers vary in electronegativity or in nobility, and in which the rate of corrosion can be controlled by controlling the difference in electronegativity or in the reactivity (or "nobility") of adjacent layers.

One embodiment of the present technology provides a multilayer coating or cladding in which one of the periodic layers is less noble than the other layer and is less noble than the substrate, thus establishing a periodic sacrificial layer in the multilayer coating.

As used herein "layers that periodically vary" means a series of two or more non-identical layers (non identical "periodic layers") that are repeatedly applied over an underlying surface or mandrel. The series of non-identical layers can include a simple alternating pattern of two or more non-identical layers (e.g., layer 1, layer 2, layer 1, layer 2, etc.) or in another embodiment may include three or more non-identical layers (e.g., layer 1, layer 2, layer 3, layer 1, layer 2, layer 3, etc.). More complex alternating patterns can involve two, three, four, five or more layers arranged in constant or varying sequences (e.g., layer 1, layer 2, layer 3, layer 2, layer 1, layer 2, layer 3, layer 2, layer 1, etc.). In one embodiment, a series of two layers is alternately applied 100 times to provide a total of 200 layers having 100 periodic layers of a first type alternated with 100 periodic layers of a second type, wherein the first and second type of periodic layer are not identical. In other embodiments, "layers that periodically vary" include 2 or more, 3 or more, 4 or more, or 5 or more layers that are repeatedly applied about 5, 10, 20, 50, 100, 200, 250, 500, 750, 1,000, 1,250, 1,500, 1,750, 2,000, 3,000, 4,000, 5,000, 7,500, 10,000, 15,000, 20,000 or more times.

As used herein, a "periodic layer" is an individual layer within "layers that periodically vary".

The present technology provides a multilayer coating or cladding in which one of the periodic layers is more noble than the other layer and is more noble than the substrate, thus establishing a periodic corrosion barrier layer in the multilayer coating.

Described ia a technology providing a multilayer coating in which one of the periodic layers is less noble than the adjacent layers and all layers are less noble than the substrate.

The present technology provides a multilayer coating or cladding in which one of the periodic layers is more noble than the adjacent layers and all layers are more noble than the substrate.

One embodiment of the present technology provides for a corrosion-resistant multilayer coating or cladding compositions that comprise individual layers, where the layers are not discrete, but rather exhibit diffuse interfaces with adjacent layers. In some embodiments the diffuse region between layers may be 0.5, 0.7, 1, 2, 5, 10, 15, 20, 25, 30, 40, 50 75, 100, 200, 400, 500, 1,000, 2,000, 4,000, 6,000, 8,000 or 10,000 nanometers. In other embodiments the diffuse region between layers may be 1 to 5, or 5 to 25, or 25 to 100, or 100 to 500, or 500 to 1,000, or 1,000 to 2,000, or 2,000 to 5,000, or 4,000 to 10,000 nanometers. The thickness of the diffuse interface may be controlled in a variety of ways, including the rate at which the electrodeposition conditions are change.

Another embodiment of the technology described herein provides a method for producing a multilayered corrosion-resistant coating that comprises multiple nanoscale layers ("nanolaminates") that vary in electrodeposited species or electrodeposited species microstructure or a combination thereof, which layers are produced by an electrodeposition process.

Where variations in electrodeposited species or combinations thereof are employed, in some aspects, the electrodeposited species may comprise one or more of Ni, Zn, Fe, Cu, Au, Ag, Pd, Sn, Mn, Co, Pb, Al, Ti, Mg and Cr, Al₂O₃, SiO₂, TiN, BoN, Fe₂O₃, MgO, and TiO₂, epoxy, polyurethane, polyaniline, polyethylene, poly ether ether ketone, polypropylene.

In other aspects, the electrodeposited species may comprise one or more metals selected from Ni, Zn, Fe, Cu, Au, Ag, Pd, Sn, Mn, Co, Pb, Al, Ti, Mg and Cr. Alternatively, the metals may be selected from: Ni, Zn, Fe, Cu, Sn, Mn, Co, Pb, Al, Ti, Mg and Cr; or from Ni, Zn, Fe, Cu, Sn, Mn, Co, Ti, Mg and Cr; or from Ni, Zn, Fe, Sn, and Cr.

According to the present invention, the electrodeposited species comprises an alloy of Ni and Co.

The metal may be present in any percentage. In such embodiments the percentage of each metal may independently selected about 0.001, 0.005, 0.01, 0.05, 0.1, 0.5, 1, 5, 10, 15, 20, 25, 30, 30, 35, 40, 45, 50, 55, 60, 65, 70, 75, 80, 85, 90, 95, 98, 99, 99.9, 99.99, 99.999 or 100 percent of the electrodeposited species.

In other embodiments the electrodeposited species may comprise one or more ceramics (*e.g.,* metals oxides or metal nitrides) selected from Al₂O₃, SiO₂, TiN, BoN, Fe₂O₃, MgO, SiC, ZrC, CrC, diamond particulates, and TiO₂. In such embodiments the percentage of each ceramic may independently selected about 0.001, 0.005, 0.01, 0.05, 0.1, 0.5, 1, 5, 10, 15, 20, 25, 30, 30, 35, 40, 45, 50, 55, 60, 65, 70, 75, 80, 85, 90, 95, 98, 99, 99.9, 99.99, 99.999 or 100 percent of the electrodeposited species.

In still other embodiments the electrodeposited species may comprise one or more polymers selected from epoxy, polyurethane, polyaniline, polyethylene, poly ether ether ketone, polypropylene, and poly(3,4-ethylenedioxythiophene) poly(styrenesulfonate). In such embodiments the percentage of each polymer may independently selected about 0.001, 0.005, 0.01, 0.05, 0.1, 0.5, 1, 5, 10, 15, 20, 25, 30, 30, 35, 40, 45, 50, 55, 60, 65, 70, 75, 80, 85, 90, 95, 98, 99, 99.9, 99.99, 99.999 or 100 percent of the electrodeposited species.

Another embodiment of the present technology provides a electrodeposition method for producing a nanolaminated, corrosion resistant coating which reduces through-hole defects in the overall corrosion resistant coating. Such methods include those wherein multi-layered coatings or claddings are applied to a substrate or mandrel as illustrated in Figure 1.

As shown on the left of Figure 1, the multilayer coating of a preferred embodiment is disposed to have two alternating (light and dark) layers covering a substrate. In the embodiment of the left side of Figure 1, the light layer is a protective layer and the dark layer is a sacrificial layer. As the sequence shows, over time the hole in the light layer expands slightly in a direction parallel to the surface of the substrate, and the sacrificial dark layer under the damaged light layer is consumed in a direction parallel with the surface of the substrate. It is also noted that the hole in the outermost (exposed) layer of the multilayer coating does not expand to breach the second light layer disposed between the hole and the substrate, thereby protecting the substrate from corrosion. In a preferred embodiment, corrosion is confined to the less-noble layers (the dark layers), with the layers being protected cathodically and the corrosion proceeding laterally rather than towards the substrate.

As shown on the right of Figure 1, the homogeneous coating of the prior art is disposed to have a single layer covering a substrate. As the sequence shows, over time the hole in the single layer expands in a direction normal to the surface of the substrate until ultimately reaching the substrate, which thereafter is affected by corrosion or other forms of degradation.

In one aspect, the technology described herein describes a method for producing a multilayer, nanolaminated coating by an electrodeposition process carried out in a single bath, comprising the steps of:
a) placing a mandrel or a substrate to be coated in a first electrolyte containing one or more metal ions, ceramic particles, polymer particles, or a combination thereof; and
b) applying electric current and varying in time one or more of: the amplitude of the electrical current, electrolyte temperature, electrolyte additive concentration, or electrolyte agitation, in order to produce periodic layers of electrodeposited species or periodic layer of electrodeposited species microstructures; and
c) growing a multilayer coating under such conditions until the desired thickness of the multilayer coating is achieved.

Such a method may further comprise after step (c), step (d) removing the mandrel or the substrate from the bath and rinsing.

The technology described herein also sets forth a method for producing a multilayer, nanolaminated coating or cladding using serial electrodeposition in two or more baths comprising the steps of:
a) placing a mandrel or substrate to be coated in a first electrolyte containing one or more metal ions, ceramic particles, polymer particles, or a combination thereof; and
b) applying electric current and varying in time one or more of: the electrical current, electrolyte temperature, electrolyte additive concentration, or electrolyte agitation, in order to produce periodic layers of electrodeposited species or periodic layer of electrodeposited species microstructures; and
c) growing a nanometer-thickness layer under such conditions; and
d) placing said mandrel or substrate to be coated in a second electrolyte containing one or more metal ions that is different from said first electrolyte, said second electrolyte containing metal ions, ceramic particles, polymer particles, or a combination thereof; and
e) repeating steps (a) through (d) until the desired thickness of the multilayer coating is achieved; wherein steps (a) through (d) are repeated at least two times.

Such a method may further comprise after step (e), step (f) removing the mandrel or the coated substrate from the bath and rinsing.

Corrosion-resistant multilayer coatings can be produced on a mandrel, instead of directly on a substrate to make a free-standing material or cladding. Cladding produced in this manner may be attached to the substrate by other means, including welding, gluing or through the use of other adhesive materials.

The multilayer coatings can comprise layers of metals that are electrolytically deposited from aqueous solution, such as Ni, Zn, Fe, Cu, Au, Ag, Pd, Sn, Mn, Co, Pb and Cr. The multilayer coating can also comprise alloys of these metals, including, but not limited to: ZnFe, ZnCu, ZnCo, NiZn, NiMn, NiFe, NiCo, NiFeCo, CoFe, CoMn. The multilayer can also comprise metals that are electrolytically deposited from a molten salt or ionic liquid solution. These include those metals previously listed, and others, including, but not limited to Al, Mg, Ti and Na. In other embodiments multilayer coatings can comprise one or more metals selected from Ni, Zn, Fe, Cu, Au, Ag, Pd, Sn, Mn, Co, Pb, Al, Ti, Mg and Cr. Alternatively, one or more metals to be electrolytically deposited may be selected from: Ni, Zn, Fe, Cu, Sn, Mn, Co, Pb, Al, Ti, Mg and Cr; or from Ni, Zn, Fe, Cu, Sn, Mn, Co, Ti, Mg and Cr; or from Ni, Zn, Fe, Sn, and Cr,

According to the present invention, the electrodeposited species comprises an alloy of Ni and Co.

The multilayer coating can comprise ceramics and polymers that are electrophoretically deposited for aqueous or ionic liquid solutions, including, but not limited to Al₂O₃, SiO₂, TiN, BoN, Fe₂O₃, MgO, and TiO₂. Suitable polymers include, but are not limited to, epoxy, polyurethane, polyaniline, polyethylene, poly ether ether ketone, polypropylene.

The multilayer coating can also comprise combinations of metals and ceramics, metals and polymers, such as the above-mentioned metals, ceramics and polymers.

The thickness of the individual layers (nanoscale layers) can vary greatly as for example between 0.5 and 10,000 nanometers, and in some embodiments is about 200 nanometers per layer. The thickness of the individual layers (nanoscale layers) may also be about 0.5, 0.7, 1, 2, 5, 10, 15, 20, 25, 30, 40, 50 75, 100, 200, 400, 500, 1,000, 2,000, 4,000, 6,000, 8,000 or 10,000 nanometers. In other embodiments the layers may be about 0.5 to 1, or 1 to 5, or 5 to 25, or 25 to 100, or 100 to 300, or 100 to 400, or 500 to 1,000, or 1,000 to 2,000, or 2,000 to 5,000, or 4,000 to 10,000 nanometers.

Individual layers may be of the same thickness or different thickness. Layers that vary periodically may also vary in thickness.

The overall thickness of the coating or cladding can vary greatly as, for example, between 2 micron and 6.5 millimeters or more. In some embodiments the overall thickness of the coating or cladding can also be between 2 nanometers and 10,000 nanometers, 4 nanometers and 400 nanometers, 50 nanometers and 500 nanometers, 100 nanometers and 1,000 nanometers, 1 micron to 10 microns, 5 microns to 50 microns, 20 microns to 200 microns, 200 microns to 2 millimeters (mm), 400 microns to 4 mm, 200 microns to 5 mm, 1 mm to 6.5 mm, 5 mm to 12.5 mm, 10 mm to 20 mm, 15 mm to 30 mm.

Layer thickness can be controlled by, among other things, the application of current in the electrodeposition process. This technique involves the application of current to the substrate or mandrel to cause the formation of the coating or cladding on the substrate or mandrel. The current can be applied continuously or, more preferably, according to a predetermined pattern such as a waveform. In particular, the waveform (e.g., sine waves, square waves, sawtooth waves, or triangle waves). can be applied intermittently to promote the electrodeposition process, to intermittently reverse the electrodeposition process, to increase or decrease the rate of deposition, to alter the composition of the material being deposited, or to provide for a combination of such techniques to achieve a specific layer thickness or a specific pattern of differing layers. The current density and the period of the wave forms may be varied independently. In some embodiments current density may be continuously or discretely varied with the range between 0.5 and 2000 mA/cm². Other ranges for current densities are also possible, for example, a current density may be varied within the range between: about 1 and 20 mA/cm²; about 5 and 50 mA/cm²; about 30 and 70 mA/cm²; 0.5 and 500 mA/cm²; 100 and 2000 mA/cm²; greater than about 500 mA/cm²; and about 15 and 40 mA/cm² base on the surface area of the substrate or mandrel to be coated. In some embodiments the frequency of the wave forms may be from about 0.01 Hz to about 50 Hz. In other embodiments the frequency can be from: about 0.5 to about10 Hz; 0.02 to about 1Hz or from about 2 to 20Hz; or from about 1 to about 5 Hz.

The multilayer coatings and claddings described herein are suitable for coating or cladding a variety of substrates that are susceptible to corrosion. In one embodiment the substrates are particularly suited for coating substrates made of materials that can corrode such as iron, steel, aluminum, nickel, cobalt, iron, manganese, copper, titanium, alloys thereof, reinforced composites and the like.

The coatings and claddings described herein may be employed to protect against numerous types of corrosion, including, but not limited to corrosion caused by oxidation, reduction. stress (stress corrosion), dissolution, dezincification, acid, base, sulfidation and the like.

### EXAMPLE #1 (reference example)

Preparation of a multilayer coating comprising nanoscale layers of zinc-iron alloy, in which the concentration of iron varies in adjacent layers.

A zinc-iron bath is produced using a commercial plating bath formula supplied by MacDermid Inc. (Waterbury, CT). The composition of the bath is described in Table 1.

**Table 1. Example Plating Bath**

| **MacDermid Material** | **Composition** | **Product #** |
|---|---|---|
| Zinc Metal | 10-12 g/l | 118326 |
| NaOH | 125-135 g/l | |
| Enviralloy Carrier | 0.5-0.6% | 174384 |
| Enviralloy Brightener | 0-0.1% | 174383 |
| Enviralloy Fe | 0.2-0.4% | 174385 |
| Enviralloy C | 4-6% | 174386 |
| Enviralloy B | 0.4-0.6% | 174399 |
| Enviralloy Stabilizer | 0.1-0.2% | 174387 |
| Envirowetter | 0.05-0.2% | 174371 |

A steel panel is immersed into the bath and connected to a power supply. The power supply was combined with a computer generated waveform supply that provided a square waveform which alternates between 25mA/cm² (for 17.14 seconds) and 15mA/cm² (for 9.52 seconds). The total plating time for a M90 coating (0.9 oz of coating per square foot) is about 1.2 hrs. In this time approximately 325 layers were deposited to achieve a total thickness of 19µm. The individual layer thickness was between 50 and 100nm.

The coating is tested in a corrosive environment, in accordance with ASTM B117 (Standard Practice for Operating Salt Spray), and shows no evidence of red rust after 300 hours of exposure.

### EXAMPLE #2

Nickel Cobalt alloys have been used extensively in recent history because of its great wear and corrosion resistance. A nanolaminated Ni-Co alloy was created which contains codeposited diamond particles. The Ni-Co alloy by itself is a corrosion and wear resistant alloy. By modulating the electrode potential in the cell, it was possible to laminate the composition of the alloy. By doing this, a galvanic potential difference was established between the layers and thus created a more favorable situation for corrosion and fatigue wear. Also, two unique phases in the crystal structure of the matrix were established. The deposition rate of the diamonds has also been shown to vary with the current density of the cell.

Preparation of a multilayer coating comprising nanoscale layers of a Nickel-Cobalt alloy with diamond codeposition, in which the concentration of the metals vary in adjacent layers.

A traditional Nickel watts bath is used as the basis for the bath. The following table describes all of the components of the bath.

**Table 2. Example Plating Bath**

| **Component** | **Concentration** |
|---|---|
| Nickel Sulfate | 250g/l |
| Nickel Chloride | 30g/l |
| Boric Acid | 40g/l |
| Cobalt Chloride | 10g/l |
| SDS | 01g/l |
| Diamond (<1 micron size) | 5g/l |

For creating samples, a steel panel is immersed into the bath and is connected to a power supply. The current density modulation was carried out between 10 mA/cm² and 35 mA/cm² with computer controlled software to form nanoscale layers. The current is applied and varied until a 20 µm thick coating had been formed on the substrate surface.

Testing for this coating has been carried out in a salf fog chamber in accordance with the ASTM B117 standers as well as taber wear tests which show the abrasion resistance to be significantly better than homogeneous coatings of Nickel-Cobalt and of stainless steel 316.

### EXAMPLE #3 (reference example)

Preparation of a Ni-Zr-Cr alloy system containing particulate precursors.

**Table 3. Bath Make-up**

| Chemical | Conc. (g/L) |
|---|---|
| Nickel Sulfate | 312 |
| Nickel Chloride | 45 |
| Boric Acid | 38 |
| Surfactant (C-TAB®) | 0.1 |

**Table 4. Particle Additions**

| Particle | Conc. (g/L) |
|---|---|
| Zirconium (1-3 microns) | 40 |
| CrC (1-5 microns) | 15 |

### Bath Make-up Procedure:

1. Mix metal salts, boric acid and C-Tab at 100°F
2. Allow full dissolution, then shift pH to between 5 and 6 with ammonium hydroxide
3. Add particles and allow full mixing
4. Particles should be allowed to mix for one day before plating to allow full surfactant coverage

### Plating Procedure:

1. Substrates should be prepared in accordance with ASTM standards
2. Electrolyte should be held between 38°C (100 °F) and 49 °C (120 °F)
3. Solution should have sufficient agitation to prevent particle settling, and fluid flow should be even across the substrate
4. A 50% duty cycle pulse waveform at 75mA/cm² effective current density is applied; the average current density of the pulse waveform can be varied and will vary particle inclusion allowing for a laminated structure with controllable deposit composition.

In a first SEM image of the plated substrates shows a high density particle incorporation of zirconium and chromium carbide particles on a steel substrate. Particle spacing is between <1 and 5 microns and the deposit is fully dense. Particles show relatively even distribution throughout the deposit. A second SEM image shows low particle density inclusions on a steel substrate. Particle spacing is between 1 and 15 microns, with some deposit cleaving at particle/matrix interface. Even particle distribution is less pronounced in the second SEM image. Minor surface roughness is seen in both deposits.

### Optional Heat Treatment:

In the event the coating requires greater corrosion resistance, a heat treatment can be applied to diffuse included zirconium throughout the deposit, creating, in this case, corrosion-resistant intermetallic phases of the Ni Cr and Zr. Heat treatment may be performed by:
1. Clean the part and dry;
2. Using a furnace of any atmosphere, heat the deposit at no more than 10°C/min up to 927°C
3. Hold at 927°C for 2 hours and
4. Air cooling the part.

The above descriptions of exemplary embodiments of methods for forming nanolaminate structures are illustrative of the present invention. Because of variations which will be apparent to those skilled in the art, however, the present invention is not intended to be limited to the particular embodiments described above. The scope of the invention is defined in the following claims.

## Claims

1. An electrodeposition method for producing a multilayer coating that comprises multiple nanoscale layers on a substrate for protecting the substrate from corrosion caused by oxidation, reduction, stress, dissolution, acid, base or sulfidation, the method comprising:
(a) placing a substrate to be coated in an electrolyte containing metal ions, ceramic particles, polymer particles, or a combination thereof;
(b) applying electric current and varying in time one or more of: the amplitude of the electric current, electrolyte temperature, electrolyte additive concentration, or electrolyte agitation, in order to produce multiple first and second nanoscale layers having a thickness from 0.5 to 10,000 nanometers that periodically vary in electrodeposited species or electrodeposited species microstructures, wherein variations in said nanoscale layers of said electrodeposited species or electrodeposited species microstructures result in galvanic interactions between the first nanoscale layers and the second nanoscale layers, wherein the first nanoscale layers have a first reactivity and the second nanoscale layers have a second reactivity that define the galvanic interactions between the first nanoscale layers and the second nanoscale layers; and
(c) growing the multilayer coating under such conditions until the desired thickness of the multilayer coating on said substrate is achieved;
wherein the electrodeposited species comprise an alloy of Ni and Co; and
wherein one of the first or second nanoscale layers is more noble than the substrate and another of the first or second nanoscale layers is less noble than the substrate, or wherein the first and second nanoscale layers are both more noble than the substrate.

2. The method of claim 1, wherein said electrodeposition method is carried out in a single electrolyte bath.

3. The method of claims 1 or 2, wherein one of the first or second nanoscale layers is more noble than the substrate and another of the first or second nanoscale layers is less noble than the substrate.

4. The method of any of claims 1-3, wherein the thickness of at least one of the nanoscale layers is selected from the group consisting of between 5 nanometers and 25 nanometers, between 25 nanometers and 100 nanometers, and between 100 nanometers and 400 nanometers.

5. The method of any of claims 1-4, wherein the thickness of the coating is selected from the group consisting of from 1 micrometer to 10 micrometers, from 5 micrometers to 50 micrometers, from 20 micrometers to 200 micrometers, from 200 micrometers to 2 millimeters, from 400 micrometers to 4 millimeters, from 200 micrometers to 5 millimeters, from 1 millimeter to 6.5 millimeters, from 5 millimeters to 12.5 millimeters, from 10 millimeters to 20 millimeters, and from 15 millimeters to 30 millimeters.

6. The method of any of claims 1-5, wherein the galvanic interactions between layers of the coating are defined by a galvanic potential of 0.00002 volts to 1.25 volts.

7. The method of claims 1-6, wherein the substrate comprises iron, carbon, copper, zinc, aluminum, titanium, nickel, chromium, graphite, carbon, cobalt, lead, epoxy, or composites or alloys thereof.

8. The method of claim 1, wherein the thickness of the nanoscale layers is between 5 nanometers and 25 nanometers, between 25 nanometers and 100 nanometers, or between 100 nanometers and 300 nanometers.

9. The method of claim 8, wherein the thickness of the coating is from 1 micrometer to 10 micrometers or from 5 micrometers to 50 micrometers.

10. The method of claims 8 or 9, wherein one of the nanoscale layers that periodically vary is less noble than another layer that periodically varies and is also less noble than an underlying substrate.

11. The method of claim 10, wherein said substrate comprises iron or steel.

12. The method of any of claims 1-11 wherein said multilayer coating is resistant to sulfidation-based corrosion.

13. The method of any one of claims 1-3, wherein the thickness of the nanoscale layers is selected from the group consisting of: 0.5 nanometers to 1 nanometer; 1 nanometer to 5 nanometers; 5 nanometers to 25 nanometers; 25 nanometers to 100 nanometers; 100 nanometers to 300 nanometers; 100 nanometers to 400 nanometers; and 500 nanometers to 1,000 nanometers.

14. The method of claim 13, wherein the thickness of the coating is selected from the group consisting of: 1 micrometer to 10 micrometers; 5 micrometers to 50 micrometers; 20 micrometers to 200 micrometers; and 200 micrometers to 2 millimeters.

15. The method of any of claims 12-14, wherein all of the nanoscale layers that periodically vary are more noble than the substrate.

16. An electrodeposited, corrosion-resistant multilayer coating on a substrate, comprising:
multiple first and second nanoscale layers that periodically vary in electrodeposited species or electrodeposited species microstructures, wherein variations in said nanoscale layers of said electrodeposited species or electrodeposited species microstructure result in galvanic interactions between the nanoscale layers, said multiple nanoscale layers having interfaces between the nanoscale layers;
said multiple first and second nanoscale layers have a thickness from 0.5 to 10,000 nanometers;
wherein the electrodeposited species comprise an alloy of Ni and Co; and
wherein one of the first or second nanoscale layers is more noble than the substrate and another of the first or second nanoscale layers is less noble than the substrate, or wherein the first and second nanoscale layers are both more noble than the substrate.

17. The coating of claim 16, wherein said nanoscale layers have diffuse interfaces therebetween.

18. The coating of claim 17, wherein said diffuse interfaces comprise a diffuse region from 1 nanometer to 5 nanometers or 5 nanometers to 25 nanometers.

19. The coating of any of claims 16-18, wherein the electrodeposited species comprises one or more particles comprising Al₂O₃, SiO₂, TiN, BoN, Fe₂O₃, MgO, TiO₂, SiC, ZrC, CrC, or diamond.

20. Use of a multilayer coating that comprises multiple nanoscale layers for protection from corrosion, the multilayer coating comprising multiple first and second nanoscale layers having a thickness from 0.5 to 10,000 nanometers that vary periodically in electrodeposited species or electrodeposited species microstructures;
wherein the electrodeposited species comprises an alloy of Ni and Co; and
wherein the overall thickness of the coating is 20 micrometers to 200 micrometers or the overall thickness is 200 micrometers to 5 millimeters.

21. The use of claim 20, wherein the corrosion is caused by oxidation, reduction, stress, dissolution, an acid, a base, or sulfidation.

## Patentansprüche

1. Elektrolytisches Abscheidungsverfahren zur Herstellung einer mehrschichtigen Beschichtung, die mehrere nanoskalige Schichten auf einem Substrat umfasst, zum Schutz des Substrats vor Korrosion, die durch Oxidation, Reduktion, Stress, Auflösung, Säure, Base oder Sulfidierung verursacht wird, wobei das Verfahren umfasst:
(a) Platzieren eines zu beschichtenden Substrats in einem Elektrolyten, der Metallionen, Keramikteilchen, Polymerteilchen oder eine Kombination davon enthält;
(b) Anlegen von elektrischem Strom und Variieren über die Zeit von einem oder mehrere von: der Amplitude des elektrischen Stroms, Elektrolyttemperatur, Elektrolytzusatzkonzentration oder Elektrolytbewegung, um mehrere erste und zweite nanoskalige Schichten mit einer Dicke von 0,5 bis 10.000 Nanometer herzustellen, die periodisch in elektrolytisch abgeschiedenen Spezies oder elektrolytisch abgeschiedenen Spezies-Mikrostrukturen variieren, wobei Variationen in den nanoskaligen Schichten der elektrolytisch abgeschiedenen Spezies oder elektrolytisch abgeschiedenen Spezies-Mikrostrukturen zu galvanischen Wechselwirkungen zwischen den ersten nanoskaligen Schichten und den zweiten nanoskaligen Schichten führen, wobei die ersten nanoskaligen Schichten eine erste Reaktivität aufweisen und die zweiten nanoskaligen Schichten eine zweite Reaktivität aufweisen, welche die galvanischen Wechselwirkungen zwischen den ersten nanoskaligen Schichten und den zweiten nanoskaligen Schichten definieren; und
(c) Wachsen der mehrschichtigen Beschichtung unter solchen Bedingungen, bis die gewünschte Dicke der mehrschichtigen Beschichtung auf dem Substrat erreicht ist;
wobei die elektrolytisch abgeschiedenen Spezies eine Legierung aus Ni und Co umfassen; und
wobei eine der ersten oder zweiten nanoskaligen Schichten edler als das Substrat ist und eine andere der ersten oder zweiten nanoskaligen Schichten weniger edel ist als das Substrat, oder wobei die erste und zweite nanoskalige Schichten beide edler als das Substrat sind.

2. Verfahren nach Anspruch 1, wobei das elektrolytische Abscheidungsverfahren in einem einzigen Elektrolytbad durchgeführt wird.

3. Verfahren nach Anspruch 1 oder 2, wobei eine der ersten oder zweiten nanoskaligen Schichten edler ist als das Substrat und eine weitere der ersten oder zweiten nanoskaligen Schichten weniger edel ist als das Substrat.

4. Verfahren nach einem der Ansprüche 1-3, wobei die Dicke mindestens einer der nanoskaligen Schichten ausgewählt ist aus der Gruppe bestehend aus zwischen 5 Nanometern und 25 Nanometern, zwischen 25 Nanometern und 100 Nanometern und zwischen 100 Nanometern und 400 Nanometern.

5. Verfahren nach einem der Ansprüche 1-4, wobei die Dicke der Beschichtung ausgewählt ist aus der Gruppe bestehend aus von 1 Mikrometer bis 10 Mikrometer, von 5 Mikrometer bis 50 Mikrometer, von 20 Mikrometer bis 200 Mikrometer, von 200 Mikrometer bis 2 Millimeter, von 400 Mikrometer bis 4 Millimeter, von 200 Mikrometer bis 5 Millimeter, von 1 Millimeter bis 6,5 Millimeter, von 5 Millimeter bis 12,5 Millimeter, von 10 Millimeter bis 20 Millimeter und von 15 Millimeter bis 30 Millimeter.

6. Verfahren nach einem der Ansprüche 1-5, wobei die galvanischen Wechselwirkungen zwischen den Schichten der Beschichtung durch ein galvanisches Potential von 0,00002 Volt bis 1,25 Volt definiert sind.

7. Verfahren nach den Ansprüchen 1-6, wobei das Substrat Eisen, Kohlenstoff, Kupfer, Zink, Aluminium, Titan, Nickel, Chrom, Graphit, Kohlenstoff, Kobalt, Blei, Epoxid oder Verbundwerkstoffe oder Legierungen davon umfasst.

8. Verfahren nach Anspruch 1, wobei die Dicke der nanoskaligen Schichten zwischen 5 Nanometer und 25 Nanometer, zwischen 25 Nanometer und 100 Nanometer oder zwischen 100 Nanometer und 300 Nanometer liegt.

9. Verfahren nach Anspruch 8, wobei die Dicke der Beschichtung von 1 Mikrometer bis 10 Mikrometer oder von 5 Mikrometer bis 50 Mikrometer beträgt.

10. Verfahren nach Anspruch 8 oder 9, wobei eine der nanoskaligen Schichten, die sich periodisch ändern, weniger edel ist als eine andere Schicht, die sich periodisch ändert, und auch weniger edel ist als ein darunterliegendes Substrat.

11. Verfahren nach Anspruch 10, wobei das Substrat Eisen oder Stahl umfasst.

12. Verfahren nach einem der Ansprüche 1-11, wobei die mehrschichtige Beschichtung beständig gegen sulfidierungsbasierte Korrosion ist.

13. Verfahren nach einem der Ansprüche 1-3, wobei die Dicke der nanoskaligen Schichten ausgewählt ist aus der Gruppe bestehend aus: 0,5 Nanometer bis 1 Nanometer; 1 Nanometer bis 5 Nanometer; 5 Nanometer bis 25 Nanometer; 25 Nanometer bis 100 Nanometer; 100 Nanometer bis 300 Nanometer; 100 Nanometer bis 400 Nanometer; und 500 Nanometer bis 1.000 Nanometer.

14. Verfahren nach Anspruch 13, wobei die Dicke der Beschichtung ausgewählt ist aus der Gruppe bestehend aus: 1 Mikrometer bis 10 Mikrometer; 5 Mikrometer bis 50 Mikrometer; 20 Mikrometer bis 200 Mikrometer; und 200 Mikrometer bis 2 Millimeter.

15. Verfahren nach einem der Ansprüche 12-14, wobei alle der nanoskaligen Schichten, die sich periodisch ändern, edler sind als das Substrat.

16. Elektrolytisch abgeschiedene, korrosionsbeständige Mehrschichtbeschichtung auf einem Substrat, umfassend:
mehrere erste und zweite nanoskalige Schichten, die periodisch in elektrolytisch abgeschiedenen Spezies oder elektrolytisch abgeschiedenen Spezies-Mikrostrukturen variieren, wobei Variationen in den nanoskaligen Schichten der elektrolytisch abgeschiedenen Spezies oder elektrolytisch abgeschiedenen Spezies-Mikrostruktur zu galvanischen Wechselwirkungen zwischen den nanoskaligen Schichten führen, wobei die mehreren nanoskaligen Schichten Schnittstellen zwischen den nanoskaligen Schichten aufweisen;
die mehreren ersten und zweiten nanoskaligen Schichten eine Dicke von 0,5 bis 10.000 Nanometern aufweisen;
wobei die elektrolytisch abgeschiedenen Spezies eine Legierung aus Ni und Co umfassen; und
wobei eine der ersten oder zweiten nanoskaligen Schichten edler als das Substrat ist und eine andere der ersten oder zweiten nanoskaligen Schichten weniger edel ist als das Substrat, oder wobei die erste und zweite nanoskalige Schichten beide edler als das Substrat sind.

17. Beschichtung nach Anspruch 16, wobei die nanoskaligen Schichten dazwischen diffuse Schnittstellen aufweisen.

18. Beschichtung nach Anspruch 17, wobei die diffusen Schnittstellen einen diffusen Bereich von 1 Nanometer bis 5 Nanometer oder 5 Nanometer bis 25 Nanometer umfassen.

19. Beschichtung nach einem der Ansprüche 16-18, wobei die elektrolytisch abgeschiedene Spezies ein oder mehrere Partikel umfasst, die Al₂O₃, SiO₂, TiN, BoN, Fe₂O₃, MgO, TiO₂, SiC, ZrC, CrC oder Diamant umfassen.

20. Verwendung einer mehrschichtigen Beschichtung umfassend mehrere nanoskalige Schichten zum Schutz vor Korrosion, wobei die mehrschichtige Beschichtung mehrere erste und zweite nanoskalige Schichten mit einer Dicke von 0,5 bis 10.000 Nanometern umfasst, die sich periodisch in elektrolytisch abgeschiedenen Spezies oder elektrolytisch abgeschiedenen Spezies-Mikrostrukturen unterscheiden;
wobei die elektrolytisch abgeschiedene Spezies eine Legierung aus Ni und Co umfasst; und
wobei die Gesamtdicke der Beschichtung 20 Mikrometer bis 200 Mikrometer ist oder die Gesamtdicke 200 Mikrometer bis 5 Millimeter ist.

21. Verwendung nach Anspruch 20, wobei die Korrosion durch Oxidation, Reduktion, Stress, Auflösung, eine Säure, eine Base oder Sulfidierung verursacht wird.

## Revendications

1. Procédé de galvanoplastie pour produire un revêtement multicouche qui comprend de multiples couches de dimension nanométrique sur un substrat pour protéger le substrat contre une corrosion provoquée par une oxydation, une réduction, une contrainte, une dissolution, un acide, une base ou une sulfuration, le procédé comprenant les opérations consistant à :
(a) placer un substrat devant être revêtu dans un électrolyte contenant des ions métalliques, des particules de céramique, des particules de polymère, ou une combinaison de ceux-ci ;
(b) appliquer un courant électrique et faire varier dans le temps une ou plusieurs parmi : l'amplitude du courant électrique, la température de l'électrolyte, la concentration de l'additif d'électrolyte, et l'agitation de l'électrolyte, afin de produire de multiples premières et deuxièmes couches de dimension nanométrique ayant une épaisseur de 0,5 à 10 000 nanomètres dont les espèces déposées par voie galvanique ou les microstructures des espèces déposées par voie galvanique varient périodiquement, où des variations dans lesdites couches de dimension nanométrique desdites espèces déposées par voie galvanique ou microstructures des espèces déposées par voie galvanique ont pour résultat des interactions galvaniques entre les premières couches de dimension nanométrique et les deuxièmes couches de dimension nanométrique, et où les premières couches de dimension nanométrique ont une première réactivité et les deuxièmes couches de dimension nanométrique ont une deuxième réactivité qui définissent les interactions galvaniques entre les premières couches de dimension nanométrique et les deuxièmes couches de dimension nanométrique ; et
(c) faire croître le revêtement multicouche dans ces conditions jusqu'à ce que l'épaisseur souhaitée du revêtement multicouche sur ledit substrat soit obtenue ;
dans lequel les espèces déposées par voie galvanique comprennent un alliage de Ni et de Co ; et
dans lequel l'une parmi les premières et deuxièmes couches de dimension nanométrique est plus noble que le substrat et une autre parmi les premières et deuxièmes couches de dimension nanométrique est moins noble que le substrat, ou dans lequel tant les premières que les deuxièmes couches de dimension nanométriques sont plus nobles que le substrat.

2. Procédé selon la revendication 1, dans lequel le procédé de galvanoplastie est réalisé dans un seul bain d'électrolyte.

3. Procédé selon la revendication 1 ou 2, dans lequel l'une parmi les premières et deuxièmes couches de dimension nanométrique est plus noble que le substrat et une autre parmi les premières et deuxièmes couches de dimension nanométrique est moins noble que le substrat.

4. Procédé selon l'une quelconque des revendications 1 à 3, dans lequel l'épaisseur d'au moins l'une des couches de dimension nanométrique est choisie dans le groupe constitué par : entre 5 nanomètres et 25 nanomètres, entre 25 nanomètres et 100 nanomètres, et entre 100 nanomètres et 400 nanomètres.

5. Procédé selon l'une quelconque des revendications 1 à 4, dans lequel l'épaisseur du revêtement est choisie dans le groupe constitué par : de 1 micromètre à 10 micromètres, de 5 micromètres à 50 micromètres, de 20 micromètres à 200 micromètres, de 200 micromètres à 2 millimètres, de 400 micromètres à 4 millimètres, de 200 micromètres à 5 millimètres, de 1 millimètre à 6,5 millimètres, de 5 millimètres à 12,5 millimètres, de 10 millimètres à 20 millimètres, et de 15 millimètres à 30 millimètres.

6. Procédé selon l'une quelconque des revendications 1 à 5, dans lequel les interactions galvaniques entre des couches du revêtement sont définies par un potentiel galvanique de 0,00002 volt à 1,25 volts.

7. Procédé selon les revendications 1 à 6, dans lequel le substrat comprend du fer, du carbone, du cuivre, du zinc, de l'aluminium, du titane, du nickel, du chrome, du graphite, du carbone, du cobalt, du plomb, un époxy, ou leurs composites ou alliages.

8. Procédé selon la revendication 1, dans lequel l'épaisseur des couches de dimension nanométrique est comprise entre 5 nanomètres et 25 nanomètres, entre 25 nanomètres et 100 nanomètres ou entre 100 nanomètres et 300 nanomètres.

9. Procédé selon la revendication 8, dans lequel l'épaisseur du revêtement est de 1 micromètre à 10 micromètres ou de 5 micromètres à 50 micromètres.

10. Procédé selon la revendication 8 ou 9, dans lequel l'une des couches de dimension nanométrique qui varient périodiquement est moins noble qu'une autre couche qui varie périodiquement et est aussi moins noble qu'un substrat sous-jacent.

11. Procédé selon la revendication 10, dans lequel ledit substrat comprend du fer ou de l'acier.

12. Procédé selon l'une quelconque des revendications 1 à 11, dans lequel ledit revêtement multicouche est résistant à une corrosion basée sur une sulfuration.

13. Procédé selon l'une quelconque des revendications 1 à 3, dans lequel l'épaisseur des couches de dimension nanométrique est choisie dans le groupe constitué par : 0,5 nanomètre à 1 nanomètre ; 1 nanomètre à 5 nanomètres ; 5 nanomètres à 25 nanomètres ; 25 nanomètres à 100 nanomètres ; 100 nanomètres à 300 nanomètres ; 100 nanomètres à 400 nanomètres ; et 500 nanomètres à 1 000 nanomètres.

14. Procédé selon la revendication 13, dans lequel l'épaisseur du revêtement est choisie dans le groupe constitué par : 1 micromètre à 10 micromètres ; 5 micromètres à 50 micromètres ; 20 micromètres à 200 micromètres ; et 200 micromètres à 2 millimètres.

15. Procédé selon l'une quelconque des revendications 12 à 14, dans lequel toutes les couches de dimension nanométrique qui varient périodiquement sont plus nobles que le substrat.

16. Revêtement multicouche résistant à la corrosion déposé par voie galvanique sur un substrat, comprenant :
de multiples premières et deuxièmes couches de dimension nanométrique dont les espèces déposées par voie galvanique ou les microstructures des espèces déposées par voie galvanique varient périodiquement, où des variations dans lesdites couches de dimension nanométrique desdites espèces déposées par voie galvanique ou microstructures des espèces déposées par voie galvanique ont pour résultat des interactions galvaniques entre les couches de dimension nanométrique, lesdites couches de dimension nanométrique ayant des interfaces entre les couches de dimension nanométrique ;
lesdites multiples premières et deuxièmes couches de dimension nanométrique ont une épaisseur de 0,5 à 10 000 nanomètres ;
dans lequel les espèces déposées par voie galvanique comprennent un alliage de Ni et de Co ; et
dans lequel l'une parmi les premières et deuxièmes couches de dimension nanométrique est plus noble que le substrat et une autre parmi les premières et deuxièmes couches de dimension nanométrique est moins noble que le substrat, ou dans lequel tant les premières que les deuxièmes couches de dimension nanométriques sont plus nobles que le substrat.

17. Revêtement selon la revendication 16, dans lequel lesdites couches de dimension nanométrique ont des interfaces diffuses entre elles.

18. Revêtement selon la revendication 17, dans lequel lesdites interfaces diffuses comprennent une région diffuse de 1 nanomètre à 5 nanomètres ou de 5 nanomètres à 25 nanomètres.

19. Revêtement selon l'une quelconque des revendications 16 à 18, dans lequel les espèces déposées par voie galvanique comprennent une ou plusieurs particules comprenant Al₂O₃, SiO₂, TiN, BoN, Fe₂O₃, MgO, TiO₂, SiC, ZrC, CrC, ou du diamant.

20. Utilisation d'un revêtement multicouche qui comprend de multiples couches de dimension nanométrique pour une protection contre la corrosion, le revêtement multicouche comprenant de multiples premières et deuxièmes couches de dimension nanométrique ayant une épaisseur de 0,5 à 10 000 nanomètres dont les espèces déposées par voie galvanique ou les microstructures des espèces déposées par voie galvanique varient périodiquement ;
dans laquelle les espèces déposées par voie galvanique comprennent un alliage de Ni et de Co ; et
dans laquelle l'épaisseur globale du revêtement est de 20 micromètres à 200 micromètres ou l'épaisseur globale est de 200 micromètres à 5 millimètres.

21. Utilisation selon la revendication 20, dans laquelle la corrosion est due à une oxydation, une réduction, une contrainte, une dissolution, un acide, une base, ou une sulfuration.
